# EUROPEAN PATENT APPLICATION

(11) **EP 1 486 263 A2**
(43) Date of publication of application: **15.12.2004**
(21) Application number: 04291451.5
(22) Date of filing: 10.06.2004
(51) Int. Cl.: B05D 7/00, B05D 1/36

(54) **Method of finish-coating automotive bodies and finished automotive bodies**

(30) Priority: 11.06.2003 JP 2003166400
(71) Applicant: Nippon Paint Co., Ltd., Osaka-shi, Osaka 531-8511 (JP)
(72) Inventor: Okada, Hidetsumu, Higashiuracho Chita-gun Aichi 470-2103 (JP); Harakawa, Tsuyoshi, Anjyo-shi Aichi 446-0071 (JP)
(74) Representative: Hubert, Philippe

(57) **Abstract**

The present invention has for its object to provide a method of finish-coating an automotive body consisting of steel plate and plastic parts which comprises forming a top film with excellent curability and adhesion concurrently on both the steel plate and plastic parts to produce an automotive body which is free from a color difference between the two kinds of parts, thus having an excellent color design and appearance.

A method of finish-coating automotive bodies comprising, in sequence, a step of coating both steel plate part and plastic part of an automotive body concurrently with a water-borne base coating composition, a step of coating the same further concurrently with a clear coating composition containing an isocyanate compound as a curing agent in a wet-on-wet technique, and a step of causing the resulting successive coats to cure concurrently to form a multilayer film,
wherein said water-borne base coating composition comprises an emulsion resin resulting from emulsion polymerization of an α,β-ethylenically unsaturated monomer mixture comprising at least 65 weight % of a (meth)acrylic ester whose ester moiety has 1 or 2 carbon atoms and having an acid value of 3 to 50 mg KOH/g and a hydroxyl value of 10 to 150 and a pigment.

## Description

### TECHNICAL FIELD

The present invention relates to a method of finish-coating automotive bodies.

### BACKGROUND TECHNOLOGY

The component members of an automotive body can be classified into two kinds, namely steel plate members and plastic members. Because of large differences in heat-resisting strength and expansion rate between these two kinds of members, any attempt to coat these members concurrently encounters the problem that if priority is given to the curing temperature for steel plate members in baking, the plastic members are deformed, while giving priority to the curing conditions for plastic members results in insufficient curing of the coat on the steel plate members. Therefore, it is the state of the art that exclusive coatings suited for the respective kinds of members are applied and independently baked for curing.

Furthermore, when such two kinds of members finished by coating operations carried out independently are assembled into an automotive body, the differences in coating conditions tend to produce a color difference between the steel plate part and the plastic part, thus detracting from the appearance of the finished automobile. Moreover, said respective coatings must be subjected to high-precision color matching for tone alignment and, moreover, a time-consuming coating is required. A further operational drawback that a step of subjecting the finished automobile to a color match test is required is occurred.

To overcome these drawbacks, it is proposed in Japanese Kokai Publication Hei-04-367761 to use a common top coating zone for different kinds of members to dispense with color matching and effect savings in coating space and, for drying, introduce the members into independent lines to suppress deformation. This method, however, is insufficient in the effect of lessening the burden on the coating-drying line.

In Japanese Kokai Publication Hei-04-370169, the aspect of coating composition has been explored but no sufficient improvements have been obtained in adhesion and other performance characteristics. Furthermore, no investigation has been undertaken into water-borne coating compositions which are expected to be used with preference as ecofriendly coating compositions in the years to come.

### OBJECT OF THE INVENTION

In view of the above state of the art, the present invention has for its object to provide a method of finish-coating an automotive body consisting of steel plate and plastic parts which comprises forming a top film with excellent curability and adhesion concurrently on both the steel plate and plastic parts to produce an automotive body which is free from a color difference between the two kinds of parts, thus having an excellent color design and appearance.

### SUMMARY OF THE INVENTION

The present invention is directed to a method of finish-coating automotive bodies comprising, in sequence, a step of coating both steel plate part and plastic part of an automotive body concurrently with a water-borne base coating composition, a step of coating the same further concurrently with a clear coating composition containing an isocyanate compound as a curing agent in a wet-on-wet technique, and a step of causing the resulting successive coats to cure concurrently to form a multilayer film, wherein said water-borne base coating composition comprises an emulsion resin resulting from emulsion polymerization of an α,β-ethylenically unsaturated monomer mixture comprising at least 65 weight % of a (meth)acrylic ester whose ester moiety has 1 or 2 carbon atoms and having an acid value of 3 to 50 mg KOH/g and a hydroxyl value of 10 to 150 and a pigment.

Preferably, the emulsion polymerization is carried out in two stages.

Preferably, the pigment is at least partially composed of a luster color pigment.

Preferably, the water-borne base coating composition contains 8 to 30 parts by weight of urethane emulsion (A) and 15 to 35 parts by weight of melamine resin (B) relative to 100 parts by weight of the resin solids in the coating composition.

Preferably, the plastic part is coated with a color primer prior to coating with the water-borne base coating composition.

Preferably, the method of finish-coating automotive bodies comprises
a step of coating both steel plate part and plastic part concurrently with an intermediate coating composition prior to the step of coating with the water-borne base coating composition.

The present invention is further directed to an automotive body having a multilayer film formed by the above-mentioned method of finish-coating automotive bodies.

The present invention is now described in detail.

### DISCLOSURE OF INVENTION

The method of finish-coating automotive bodies according to the invention comprises a step of coating with a water-borne base coating composition comprising an emulsion resin and a pigment, a step of coating with a clear coating composition containing an isocyanate compound as a curing agent in a wet-on-wet technique, and a step of causing the resulting successive coats to cure, wherein all said steps can be respectively carried out on the steel plate and plastic parts concurrently. Since the finish-coating can thus be carried out on the two kinds of parts concurrently from the beginning to the end, the method is capable of providing a film having excellent water resistance and other performance characteristics without such drawbacks as a color difference, an increase in cost, and lengthening of the production process.

The water-borne base coating composition for use in the method of finish-coating automotive bodies according to the invention contains an emulsion resin resulting from emulsion polymerization of an α,β-ethylenically unsaturated monomer mixture comprising at least 65 weight % of a (meth)acrylic ester whose ester moiety has 1 or 2 carbon atoms, and having an acid value of 3 to 50 mg KOH/g and a hydroxyl value of 10 to 150 for enhanced adhesion of the resulting film and improved coating workability.

If the content of said (meth)acrylic ester whose ester moiety has 1 or 2 carbon atoms, in said α,β-ethylenically unsaturated monomer mixture is less than 65 weight %, the appearance of the resulting multilayer film will be deteriorated. The above-mentioned (meth)acrylic ester whose ester moiety has 1 or 2 carbon atoms is not particularly restricted but includes methyl (meth)acrylate and ethyl (meth)acrylate. The term "(meth)acrylic ester" means both an acrylic ester and a methacrylic ester.

The acid value of said α,β-ethylenically unsaturated monomer mixture should lie within the range of 3 mg KOH/g as a lower limit to 50 mg KOH/g as an upper limit. If the acid value is less than 3 mg KOH/g, the coating workability will be inadequate, and if it exceeds 50 mg KOH/g, the performance characteristics of the resulting film will be deteriorated. The more preferred lower limit of the acid value is 7 mg KOH/g and the more preferred upper limit is 40 mg KOH/g. The acid value mentioned herein is the acid value of the resin solids.

Such an α,β-ethylenically unsaturated monomer mixture contains an α,β-ethylenically unsaturated monomer having an acidic group. This α,β-ethylenically unsaturated monomer having an acidic group is not particularly restricted but includes, for example, acrylic acid, methacrylic acid, acrylic acid dimer, crotonic acid, 2-acryloyloxyethyl phthalate, 2-acryloyloxyethyl succinate, 2-acryloyloxyethyl acid phosphate, 2-acrylamido-2-methylpropanesulfonic acid, ω-carboxy-polycaprolactone mono(meth)acrylate, isocrotonic acid, α-hydro-ω-[(1-oxo-2-propenyl)oxy]poly[oxy(1-oxo-1,6-hexanediyl)], maleic acid, fumaric acid, itaconic acid, 3-vinylsalicylic acid, and 3-vinylacetylsalicylic acid. The preferred, among these, are acrylic acid, methacrylic acid, and acrylic acid dimmer.

Moreover, the hydroxyl value of said α,β-ethylenically unsaturated monomer mixture should lie within the range of 10 as a lower limit to 150 as an upper limit. The preferred lower limit is 20 and the preferred upper limit is 100. If the hydroxyl value is less than 10, no sufficient curability may be expected. If it exceeds 150, the resulting film will be deficient in various performance characteristics. Such an α,β-ethylenically unsaturated monomer mixture contains an α,β-ethylenically unsaturated monomer having a hydroxyl group. This α,β-ethylenically unsaturated monomer having a hydroxyl group is not particularly restricted but includes, for example, hydroxyethyl (meth) acrylate, hydroxypropyl (meth) acrylate, hydroxybutyl (meth)acrylate, allyl alcohol, methacryl alcohol, and hydroxyethyl (meth)acrylate-ε-caprolactone adduct. In view of the adhesion to the underlying surface and the effect on film properties, hydroxyethyl (meth)acrylate, hydroxybutyl (meth)acrylate, and hydroxyethyl (meth)acrylate-ε-caprolactone adduct are preferred. The term "hydroxyl value" as used herein means the hydroxyl value of the resin solids.

Furthermore, said α,β-ethylenically unsaturated monomer mixture may contain other α,β-ethylenically unsaturated monomers, for example (meth)acrylic esters whose ester moieties have 3 or more carbon atoms, (e.g. n-butyl (meth)acrylate, isobutyl (meth)acrylate, t-butyl (meth)acrylate, 2-ethylhexyl (meth)acrylate, lauryl methacrylate, phenyl acrylate, isobornyl (meth)acrylate, cyclohexyl (meth)acrylate, t-butylcyclohexyl (meth)acrylate, dicyclopentadienyl (meth) acrylate, dihydrodicyclopentadienyl (meth)acrylate, etc.), polymerizable amide compounds (e.g. (meth)acrylamide, N-methylol(meth)acrylamide, N,N-dimethyl(meth)acrylamide, N,N-dibutyl(meth)acrylamide, N,N-dioctyl(meth)acrylamide, N-monobutyl(meth)acrylamide, N-monooctyl(meth)acrylamide, 2,4-dihydroxy-4-vinylbenzophenone, N-(2-hydroxyethyl)acrylamide, N-(2-hydroxyethyl)methacrylamide, etc.), polymerizable aromatic compounds (e.g. styrene, α-methylstyrene, vinyl ketone, t-butylstyrene, p-chlorostyrene, vinylnaphthalene, etc.); polymerizable nitriles (e.g. acrylonitrile, methacrylonitrile, etc.), α-olefins (e.g. ethylene, propylene, etc.), vinyl esters (e.g. vinyl acetate, vinyl propionate, etc.), and dienes (e.g. butadiene, isoprene, etc.).

These can be selectively used according to specific objectives but for facilitating expression of hydrophilicity, it is preferable to use (meth)acrylamides. When these other α,β-ethylenically unsaturated monomers are formulated in said α,β-ethylenically unsaturated monomer mixture, their content must be less than 35 weight %.

From the standpoint of physical properties of the resulting film, the glass transition temperature (Tg) of the emulsion resin for use in the method of finish-coating automotive bodies according to the invention is preferably within the range of -20°C to 80°C. Incidentally while the above-mentioned acid value, hydroxyl value, and Tg can be directly determined by using samples of the above emulsion resin, these may also be calculated from the formulating amounts of various α,β-ethylenically unsaturated monomers in said α,β-ethylenically unsaturated monomer mixture.

The emulsion resin mentioned above can be obtained by emulsion polymerization of the above α,β-ethylenically unsaturated monomer mixture. This emulsion polymerization is not particularly restricted but can be carried out by the methods well known in the art. For example, there can be used a method which comprises dissolving an emulsifier in water or, according to need, an aqueous medium composed of water and an organic solvent, e.g. an alcohol, and adding said α,β-ethylenically unsaturated monomer mixture together with a polymerization initiator dropwise under heating and stirring and a method in which the α,β-ethylenically unsaturated monomer mixture emulsified with an emulsifier and water in advance is similarly added dropwise.

The polymerization initiator mentioned above is not particularly restricted but includes, for example, azo type oil-borne compounds (e.g. azobisisobutyronitrile, 2,2-azobis(2-methylbutyronitrile), 2,2-azobis(2,4-dimethylvaleronitrile), etc.) and water-borne compounds (e.g. anionic 4,4-azobis(4-cyanovaleric acid) and cationic 2,2-azobis(2-methylpropionamidine)); and redox type oil-borne peroxides (e.g. benzoyl peroxide, p-chlorobenzoyl peroxide, lauroyl peroxide, t-butyl perbenzoate, etc.) and water-borne peroxides (e.g. potassium persulfate, ammonium peroxide, etc.).

The emulsifier mentioned above is not particularly restricted but includes those compounds which are used frequently in the art. However, the preferred are reactive emulsifiers such as Antox MS-60 (product of Nippon Nyukazai Co., Ltd.), Eleminol JS-2 (product of Sanyo Chemical Industries, Ltd.), Adeka Reasoap NE-20 (product of Asahi Denka Co.), and Aqualon HS-10 (product of Dai-Ichi Kogyo Seiyaku Co.).

In conducting the above emulsion polymerization, a chain transfer agent, such as a mercaptan compound, e.g. laurylmercaptan, α-methylstyrene dimmer, or the like, may be used where necessary for molecular weight modulation.

The reaction temperature depends on the polymerization initiator used. For example, when an azo type initiator is used, the reaction is preferably carried out at 60 to 90°C, while when a redox type initiator is used, the preferred reaction temperature is 30 to 70°C. Generally the reaction time ranges from 1 to 8 hours. The amount of the polymerization initiator relative to the total amount of said α,β-ethylenically unsaturated monomer mixture is generally 0.1 to 5 weight %, preferably 0.2 to 2 weight %.

The above emulsion polymerization is preferably carried out in two stages. Thus, a portion of said α,β-ethylenically unsaturated monomer mixture (which will hereinafter be referred to as α,β-ethylenically unsaturated monomer mixture 1) is first emulsion-polymerized and, then, the remainder of the α,β-ethylenically unsaturated monomer mixture (which will hereinafter be referred to as α,β-ethylenically unsaturated monomer mixture 2) is added and emulsion-polymerized. The formulation of said α,β-ethylenically unsaturated monomer mixture 1 and that of said α,β-ethylenically unsaturated monomer mixture 2 may be the same or different.

Conducting the emulsion polymerization thus in two stages is preferred because the control of physical properties of the resulting emulsion resin is facilitated.

To form a multilayer film with a high-quality appearance, said α,β-ethylenically unsaturated monomer mixture 1 preferably contains an amide group-containing α,β-ethylenically unsaturated monomer, and, in this case, it is particularly preferable that said α,β-ethylenically unsaturated monomer mixture 2 does not contain an amide group-containing α,β-ethylenically unsaturated monomer. Since the above-mentioned α,β-ethylenically unsaturated monomer mixture is a mixture of said α,β-ethylenically unsaturated monomer mixture 1 and α,β-ethylenically unsaturated monomer mixture 2, the conditions mentioned above for the α,β-ethylenically unsaturated monomer mixture should be satisfied by this mixture of α,β-ethylenically unsaturated monomer mixture 1 and α,β-ethylenically unsaturated monomer mixture 2.

The mean particle diameter of the thus-obtained emulsion resin is preferably within the range of 0.01 µm as a lower limit to 1.0 µm as an upper limit. If the mean particle diameter is less than 0.01 µm, the improvement in coating workability will not be remarkable. If it exceeds 1.0 µm, the appearance of the resulting film may be adversely affected. The mean particle diameter can be controlled by adjusting the monomer formulation and emulsion polymerization conditions, among other factors.

Since the above emulsion resin is highly stable at pH within the range of 5 to 10, the pH is preferably controlled within this range. For this pH control, a neutralization procedure using a base may be used where necessary. This neutralization is preferably carried out by adding a tertiary amine, such as dimethylethanolamine or triethylamine, either before or after the emulsion polymerization.

The water-borne base coating composition mentioned above preferably contains said emulsion resin within the range of 25 parts by weight as a lower limit to 70 parts by weight as an upper limit. If the emulsion resin content is less than 25 parts by weight, the film properties, such as adhesion, strength, etc., as well as coating workability will be adversely affected. If it exceeds 70 parts by weight, the water resistance and resistance to warm water, for instance, tend to be deteriorated. The more preferred lower limit is 30 parts by weight and the more preferred upper limit is 55 parts by weight.

The water-borne base coating composition for use in the method of finish-coating automotive bodies according to the invention contains a pigment in addition to said emulsion resin. The pigment mentioned just above is not particularly restricted but includes luster color pigments and color pigments, among others.

The shape of the luster color pigment is not particularly restricted and may even be stained. However, preferably, its mean particle diameter (D₅₀) is for example within the range of 2 µm as a lower limit to 50 µm as an upper limit, and its thickness is within the range of 0.1 µm as a lower limit to 5 µm as an upper limit. Moreover, the mean particle diameter is more preferably within the range of 10 µm as a lower limit to 35 µm as an upper limit to heighten luster of the luster color pigment.

The luster color pigment is not particularly restricted but may for example consist of stained or non-stained metal or alloy of aluminum, copper, zinc, iron, nickel, tin, aluminum oxide and/or the like or a mixture thereof. In addition, interference mica pigment, white mica pigment, graphite pigment, etc. are also subsumed in the concept of said luster color pigment. The water-borne base coating composition for use in the invention preferably contains such a luster color pigment at least in part from the standpoint of imparting color design.

In cases where said water-borne base coating composition contains said luster color pigment, the pigment concentration (PWC) is preferably not more than 18.0 weight % for general purposes. If the pigment concentration exceeds 18.0 weight %, the film appearance tends to be decreased. The upper limit of the pigment concentration is more preferably 15.0 weight % and still more preferably 13.0 weight %. The lower limit of the pigment concentration is preferably 0.01 weight %.

The color pigment mentioned above is not particularly restricted but includes, for example, such organic pigments as azo chelate pigments, insoluble azo pigments, condensed azo pigments, phthalocyanine pigments, indigo pigmens, perinone pigments, perylene pigments, dioxane pigments, quinacridone pigments, isoindolinone pigments, and metal complex pigments. Inorganic color pigments which can be used are not particularly restricted but include yellow lead, yellow iron oxide, red iron oxide, carbon black, titanium dioxide, and so forth.

The total pigment concentration (PWC) of said water-borne base coating composition is preferably within the range of 0.1 weight % as a lower limit to 50 weight % as an upper limit. The upper limit is more preferably 40 weight %, still more preferably 30 weight %. If the above total pigment concentration exceeds 50 weight %, the film appearance will be undesirably sacrificed. The lower limit is more preferably 0.5 weight %, still more preferably 1.0 weight %.

Furthermore, in cases where the water-borne base coating composition for use in the invention contains a flake-like luster color pigment, the water-borne base coating composition preferably contains a phosphoric acid group-containing acrylic resin as well. This phosphoric acid group-containing acrylic resin is an acrylic resin which can be obtained by copolymerizing a monomer of the following general formula (I) with one or more other ethylenic monomers.

CH₂=CXCO (OY) ₙOPO (OH) ₂ (I)

(wherein X represents a hydrogen atom or a methyl group; Y represents an alkylene group of 2 to 4 carbon atoms; n represents an integer of 3 to 30).

The above phosphoric acid group-containing acrylic resin is used for effecting good dispersion of said flake-like luster color pigment. This resin preferably has an acid value of 15 to 200 mg KOH/g, a phosphoric acid group-derived acid value of 10 to 150 mg KOH/g, and a number average molecular weight of 1000 to 50000. If the acid value is less than 15 mg KOH/g, the flake-like luster color pigment may not be sufficiently dispersed. On the other hand, if the acid value exceeds 200 mg KOH/g, it may happen that the storage stability of the water-borne base coating composition is adversely affected. More preferably, of the total acid value of 15 to 200 mg KOH/g, the phosphoric acid group-derived acid value accounts for 15 to 100 mg KOH/g.

In cases where the water-borne base coating composition for use in the invention contains a metallic luster color pigment, the base coating composition preferably contains a phosphoric acid group-containing compound having an alkyl group as a corrosion inhibitor of metallic luster color pigment, or for improved wettability of the metallic luster color pigment and improved physical properties of the resulting multilayer film.

The alkyl group mentioned above is preferably an alkyl group of 8 to 18 carbon atoms, more preferably an alkyl group of 10 to 14 carbon atoms. When the number of carbon atoms is less than 8, the wettability and, hence, adhesion are unsatisfactory. When the number of carbon atoms is greater than 18, the compound tends to separate out in the coating to cause troubles.

The phosphoric acid group-containing compound having an alkyl group is not particularly restricted but includes mono- or dialkyl acid phosphates, among others. The mono- or dialkyl acid phosphates are not particularly restricted but include, for example, 2-ethylhexyl acid phosphate, mono- or di-isodecyl acid phosphate, mono- or ditridecyl acid phosphate, mono- or dilauryl acid phosphate, and mono- or dinonylphenyl acid phosphate.

In cases where the water-borne base coating composition for use in the invention contains said phosphoric acid group-containing compound, the amount of said phosphoric acid group-containing compound relative to the resin solids in the coating composition is preferably within the range of 0.1 weight % as a lower limit to 5 weight % as an upper limit. The more preferred lower limit is 0.2 weight % and the more preferred upper limit is 2 weight %. If the above amount is less than 0.1 weight %, the corrosion inhibition effect will not be sufficient but rather evolution of gases and discoloration of the metallic luster color pigment will be encountered. If it exceeds 5 weight %, the water resistance tends to be decreased.

The water-borne base coating composition for use in the invention preferably further contains a polyether polyol. The polyether polyol mentioned just above is not particularly restricted but is preferably a compound containing an average of 0.02 primary hydroxyl group per molecule and having a number average molecular weight of 300 to 3000, and a water tolerance value of not less than 2.0. By incorporating such a polyether polyol, the flip-flop value, water resistance, and chipping resistance of the resulting film can be improved.

If the average number of primary hydroxyl groups per molecule of said polyether polyol is less than 0.02, the water resistance and chipping resistance will be adversely affected. The above-mentioned average number of primary hydroxyl groups is more preferably not less than 0.04, still more preferably not less than 1. The number of hydroxyl groups inclusive of said primary hydroxyl groups and secondary and tertiary hydroxyl groups is preferably at least 3 per molecule from the standpoint of water resistance and chipping resistance of the film. Moreover, the hydroxyl value of said polyether polyol is preferably within the range of 30 as a lower limit to 700 as an upper limit. If the hydroxyl value is less than 30, the curability is decreased to detract from the water resistance and chipping resistance of the film. If the hydroxyl value exceeds 700, the coating stability and the water resistance of the film will be sacrificed. The more preferred lower limit is 50 and the more preferred upper limit is 500.

If the number average molecular weight of said polyether polyol is less than 300, the water resistance of the film will be decreased. If it exceeds 3000, the curability and chipping resistance of the film will be sacrificed. The more preferred lower limit is 400 and the more preferred upper limit is 2,000. The molecular weight referred to in this description is the value measured by GPC using styrene polymers as standards.

Furthermore, if the water tolerance value of said polyether polyol is less than 2.0, the dispersibility in water will be sacrificed to thereby deteriorate the film appearance. The water tolerance value is more preferably not less than 3.0.

The water tolerance mentioned above is a parameter for evaluation of the degree of hydrophilicity and the higher the tolerance value is, the higher is the hydrophilicity of the polyol. The method of measuring the water tolerance mentioned in this description comprises dispersing 0.5 g of the polyether polyol with 10 ml of acetone in a 100 ml beaker at 25°C, adding deionized water to the mixture gradually using a burette, and measuring the amount (ml) of deionized water required until the mixture becomes clouded. This amount of deionized water is recorded as the water tolerance value.

In this method, assuming that the polyether polyol is hydrophobic, the compatibility of the polyether polyol with acetone is initially good but addition of a small amount of deionized water results in incompatibility and the mixture becomes clouded in the system. causing clouded system. Conversely in the case where the polyether polyol is hydrophilic, the higher the hydrophilicity of the polyether polyol is, the larger is the amount of deionized water which is required until the mixture becomes clouded. Therefore, the degree of hydrophilicity/hydrophobicity of a polyether polyol can be estimated by this method.

The above polyether polyol is preferably contained within the range of 1 weight % as a lower limit to 40 weight % as an upper limit relative to the resin solids in the coating composition. If the polyol content is less than 1 weight %, the film appearance tends to be adversely affected. If it exceeds 40 weight %, the water resistance and chipping resistance of the film will be decreased.

The polyether polyol mentioned above is not particularly restricted but includes, for example, the alkylene oxide adducts of active hydrogen-containing compounds such as polyhydric alcohols, polyphenols, and polycarboxylic acids. The active hydrogen-containing compounds mentioned just above are not particularly restricted but include, for example, water, polyhydric alcohols (dihydric alcohols such as ethylene glycol, diethylene glycol, trimethylene glycol, propylene glycol, 1,4-butanediol, 1,6-hexanediol, neopentyl glycol, 1,4-dihydroxymethylcyclohexane, cyclohexylene glycol, etc.; trihydric alcohols such as glycerol, trihydroxyisobutane, 1,2,3-butanetriol, 1,2,3-pentanetriol, 2-methyl-1,2,3-propanetriol, 2-methyl-2,3,4-butanetriol, 2-ethyl-1,2,3-butanetriol, 2,3,4-pentanetriol, 2,3,4-hexanetriol, 4-propyl-3,4,5-heptanetriol, 2,4-dimethyl-2,3,4-pentanetriol, pentamethylglycerol, pentaglycerol, 1,2,4-butanetriol, 1,2,4-pentanetriol, trimethylolethane, trimethylolpropane, etc.; tetrahydric alcohols such as pentaerythritol, 1,2,3,4-pentanetetrol, 2,3,4,5-hexanetetrol, 1,2,4,5-pentanetetrol, 1,3,4,5-hexanetetrol, diglycerol, sorbitan, etc.; pentahydric alcohols such as adonitol, arabitol, xylitol, triglycerol, etc.; hexahydric alcohols such as dipentaerythritol, sorbitol, mannitol, iditol, inositol, dulcitol, talose, allose, etc.; octahydric alcohols such as sucrose etc.; polyglycerol, etc.); polyphenols [polyphenols (pyrogallol, hydroquinone, phloroglucin, etc.), bisphenols (bisphenol A, bisphenol sulfone, etc.)]; polycarboxylic acids [aliphatic polycarboxylic acids (succinic acid, adipic acid, etc.), aromatic polycarboxylic acids (phthalic acid, terephthalic acid, trimellitic acid, etc.)], etc.; and mixtures of two or more of these compounds. Particularly as the trihydric or higher hydric alcohols which can be used with advantage for the synthesis of polyether polyols containing at least 3 hydroxyl groups per molecule, there can be mentioned glycerol, trimethylolethane, trimethylolpropane, pentaerythritol, sorbitan, and sorbitol.

The above polyether polyol can be obtained by conducting the addition reaction of an alkylene oxide with said active hydrogen-containing compound, generally in the presence of an alkaline catalyst, under atmospheric or supratmospheric pressure at a temperature of 60 to 160°C in the conventional manner. The alkylene oxide mentioned above is not particularly restricted but includes ethylene oxide, propylene oxide, butylene oxide, etc., and these can be used each alone or in a combination of two or more species. The mode of addition in the case of using two or more species of alkyene oxide may be whichever desired of block addition and random addition.

As the polyether polyol, commercial products can be used. Thus, Primepol PX-1000, Sannix SP-750, PP-400 (all are products of Sanyo Chemical Industries, Ltd.), and PTMG-650 (product of Mitsubishi Chemical Co.), among others, can be mentioned.

Furthermore, for improved pigment dispersibility, the polyether polyol may have been modified with an amino resin or a basic substance such as hydroxyethylethyleneimine (e.g. HEA, product of Sogo Pharmaceutical Co., Ltd.) or 2-hydroxypropyl-2-aziridinylethyl carboxylate (e.g. HPAC, product of Sogo Pharmaceutical Co., Ltd.) as described in Japanese Kokai Publication Sho-59-138269. The amount of use of the modifying agent is preferably 1 to 10 weight % relative to said polyether polyol. If the amount is less than 1 weight %, no sufficient modification can be obtained. If it exceeds 10 weight %, the stability of the modified polyether polyol becomes poor.

Preferably, the water-borne base coating composition for use in the method of finish-coating automotive bodies according to the invention further contains a film-forming resin such as urethane resin, acrylic resin, polyester resin, alkyd resin, polyether resin or epoxy resin. By incorporating said film-forming resin, higher adhesion and water resistance, among other various performance characteristics, can be imparted to the resulting film. The form of said film-forming resin is not particularly restricted but includes, for example, an emulsion, a dispersion, and a solution. From the standpoint of coating workability and film performance characteristics such as weather resistance, water resistance, etc., it is particularly advantageous to use an urethane emulsion (A) and/or a water-soluble acrylic resin.

The formulating amount of said urethane emulsion (A) is preferably within the range of 8 parts by weight as a lower limit to 30 parts by weight as an upper limit relative to 100 parts by weight of the resin solids in the coating composition. If the formulating amount is less than 8 parts by weight, adhesion, among other performance characteristics, will be sacrificed. If it exceeds 30 parts by weight, the storage stability of the coating will be adversely affected. The more preferred lower limit is 10 parts by weight and the more preferred upper limit is 25 parts by weight.

The urethane emulsion (A) is not particularly restricted but includes the emulsion prepared by the procedure which comprises reacting a diisocyanate with a glycol containing at least 2 active hydrogen atoms or a glycol having a carboxyl group in an NCO/OH ratio of 0.5 to 2.0 to give a urethane prepolymer, subjecting this prepolymer to neutralization and chain extension, and finally adding deionized water.

The diisocyanate to be used in the preparation of said urethane prepolymer which is a component of said urethane emulsion (A) is not particularly restricted but includes aliphatic, alicyclic and aromatic diisocyanates. Specifically, there can be mentioned 2,4-tolylene diisocyanate, 2,6-tolylene diisocyanate, 4,4'-diphenylmethane diisocyanate, m-phenylene diisocyanate, xylylene diisocyanate, tetramethylene diisocyanate, hexamethylene diisocyanate, m-xylene diisocyanate, lysine diisocyanate, 1,4-cyclohexylene diisocyanate, 4,4'-dicyclohexylmethane diisocyanate, 3,3'-dimethyl-4,4'-biphenylene diisocyanate, 3,3'-dimethoxy-4,4'-biphenylene diisocyanate, 1,5-naphthalene diisocyanate, 1,5-tetrahydronaphthalene diisocyanate, isophorone diisocyanate, and various derivatives thereof.

The glycol mentioned above is not particularly restricted but any glycol containing at least 2 active hydrogen atoms can be used. Specifically, there may be mentioned low-molecular-weight glycols such as ethylene glycol, diethylene glycol, triethylene glycol, 1,2-propylene glycol, trimethylene glycol, 1,3-butylene glycol, tetramethylene glycol, hexamethylene glycol, hydrogenated bisphenol A, ethylene oxide or propylene oxide adduct of bisphenol A, etc., polyoxypropylene glycols, polyoxypropylene-glycerol adduct, polyoxypropylene-trimethylolpropane adduct, polyoxypropylene-1,2,6-hexanetriol adduct, polyoxypropylene-pentaerythritol adduct, polyoxypropylene-sorbitol adduct, methylene-bis-phenyl diisocyanate, polytetrafuran polyether subjected to chain extension with hydrazine, and various derivatives thereof, among others.

Furthermore, those polyesters which are condensation products of adipic acid or phthalic acid with ethylene glycol, propylene glycol, 1,3-butylene glycol, 1,4-butylene glycol, diethylene glycol, hexanediol, 1,2,6-hexanetriol, trimethylolpropane, 1,1,1-trimethylolethane, etc., polycaprolactone, etc. can also be mentioned.

The glycol containing a carboxyl group is not particularly restricted but includes, for example, 2,2-dimethylolpropionic acid, 2,2-dimethylolbutyric acid, and 2,2-dimethylolvaleric acid.

The above urethane emulsion (A) can be obtained by the procedure which comprises subjecting a urethane prepolymer, which is the reaction product of said glycol with an excess of an isocyanate compound, to neutralization and chain extension with a cationic, nonionic or anionic surfactant, and adding deionized water for dispersing.

The neutralizing agent for use in the above neutralization procedure is not particularly restricted but includes, for example, amines such as trimethylamine, triethylamine, tri-n-propylamine, tributylamine, triethanolamine, etc., sodium hydroxide, potassium hydroxide, and ammonia.

The chain extender that can be used is not particularly restricted but includes polyols such as ethylene glycol, propylene glycol, etc.; aliphatic, alicyclic or aromatic diamines such as ethylenediamine, propylenediamine, hexamethylenediamine, tolylenediamine, xylylenediamine, diphenyldiamine, diaminodiphenylmethane, diaminocyclohexylmethane, piperazine, 2-methylpiperazine, 1,2-bis(2-cyanoethylamino)ethane, isophoronediamine, etc.; and water, among others.

Commercial products of urethane emulsions which can be used are not particularly restricted but include, for example, the Bondic series and Hydran series available from Dainippon Ink and Chemicals, Inc., the Impranil series from Bayer, the NeoRez series from Avecia, such as NeoRez R-940, R-941, R-960, R-962, R-966, R-967, R-9603, R-9637, R-9618, R-9619, XR-9624, etc., the Ucoat, Uprane, and Permalin series from Sanyo Chemical Industries, Ltd., and the Adeka Bontiter series from Asahi Denka Co., Ltd. The above urethane emulsion (A) may be used one species only or in a combination of two or more species.

The water-soluble acrylic resin mentioned above is a polymer resulting from the polymerization of said α,β-ethylenically unsaturated monomer mixture and does not form an emulsion in water but dissolves in water. The water-soluble acrylic resin can be prepared in water-soluble form by judicious selection of monomers.

The water-borne base coating composition for use in the method of finish-coating automotive bodies according to the invention preferably contains a curing agent, too. By formulating the curing agent, a high degree of curability can be imparted to the film applied. The curing agent is not particularly restricted but includes, for example, melamine resin and epoxy resin, although the use of melamine resin (B) is preferred from the standpoint of performance characteristics of the film and cost. Moreover, for improved low-temperature curability, a blocked isocyanate resin, a carbodiimide compound, or an oxazoline compound is preferably added in combination.

The formulating amount of said melamine resin (B) is preferably within the range of 15 parts by weight as a lower limit to 35 parts by weight as an upper limit, relative to 100 parts by weight of the resin solids in the coating composition. When the formulating amount is less than 15 parts by weight, the curability is sacrificed. When it exceeds 35 parts by weight, the adhesion and resistance to warm water are sacrificed. The lower limit is more preferably 20 parts by weight.

Furthermore, said water-borne base coating composition may contain a rheology control agent for preventing miscibility with a clear film and providing for coating workability. The rheology control agent mentioned above is not particularly restricted but generally substances showing thixotropic properties can be used. For example, a swollen dispersion of a fatty acid amide, amide type fatty acids, polyamide type compounds such as long-chain polyaminoamide phosphates, polyethylene type compounds such as a colloidal swollen dispersion of polyethylene oxide, organic acid smectite clay, organic bentonite type compounds such as montmorillonite, etc., inorganic pigments such as aluminum silicate, barium sulfate, etc., flake-like pigments which develop shape-dependent viscosity, crosslinked or non-crosslinked resin particles, urethane association type rheological agent, alkali swellable polycarboxylic acids, etc. can be mentioned as rheology control agents.

In the base coating composition for use in the invention, additives which are usually formulated in coatings, such as the surface adjuster, oxidation inhibitor, antifoaming agent, etc., may be formulated together with the component materials described hereinbefore. The formulating amounts of these additives are not particularly restricted unless deviations are made from the ranges known to those skilled in the art.

The method of producing said water-borne base coating composition is not particularly restricted. Thus, any process known to those skilled in the art, such as the process in which a formulation comprising said pigment and other components is compounded and dispersed by means of a kneader, a roll, or the like, can be used.

The method of finish-coating automotive bodies according to the invention comprises applying said water-borne base coating composition and, then, applying a clear coating composition containing an isocyanate compound as a curing agent. The isocyanate compound for use as said curing agent is not particularly restricted but includes, for example, aliphatic isocyanates such as trimethylene diisocyanate, tetramethylene diisocyanate, pentamethylene diisocyanate, hexamethylene diisocyanate (HDI), trimethylhexamethylene diisocyanate, etc.; aliphatic cyclic isocyanates such as 1,3-cyclopentane diisocyanate, 1,4-cyclohexane diisocyanate, 1,2-cyclohexane diisocyanate, etc.; aromatic isocyanates such as xylylene diisocyanate (XDI), 2,4-tolylene diisocyanate (TDI), 2,6-tolylene diisocyanate, etc.; and alicyclic isocyanates such as isophorone diisocyanate (IPDI), bis(isocyanatomethyl)norbornane, etc.; dimmers and polymers thereof, such as biurets and nurates, and mixtures thereof.

The clear coating composition mentioned above preferably contains a film-forming resin containing a hydroxyl group. The formulating ratio of the isocyanate compound to the film-forming resin can be liberally selected according to the intended application but as far as the clear coating composition for use in the invention is concerned, it is preferable to formulate these components so that the equivalent ratio (NCO/OH) of isocyanato group (NCO) to hydroxy group (OH) will be 0.5 as a lower limit to 1.7 as an upper limit. If the ratio is below the lower limit, curability will be insufficient. On the other hand, if the upper limit is exceeded, the cured film will be too hard and brittle. The more preferred lower limit is 0.7 and the more preferred upper limit is 1.5. The form of said clear coating composition may be whichever desired of solvent-borne type and water-borne type.

The hydroxyl value of said film-forming resin is preferably within the range of 20 as a lower limit to 200 as an upper limit. If the above upper limit is exceeded, water resistance will be decreased. If the value is less than the above lower limit, the curability of the film will be poor. The more preferred lower limit is 30 and the more preferred upper limit is 180.

Furthermore, the number average molecular weight of said film-forming resin is preferably within the range of 1000 as a lower limit to 20000 as an upper limit. If the number average molecular weight is less than 1,000, workability and curability will be unsatisfied. If it exceeds 20000, the nonvolatile content will be so low that workability tends to be rather adversely affected. The more preferred lower limit is 2000 and the more preferred upper limit is 15000. The molecular weight referred to in this description is estimated by GPC using styrene polymers as standards.

More preferably the above film-forming resin has an acid value within the range of 2 mg KOH/g as a lower limit to 30 mg KOH/g as an upper limit. If the upper limit is exceeded, the water resistance of the film will be decreased. If the acid value is less than the above lower limit, the curability of the film will become poor. The more preferred lower limit is 3 mg KOH/g and the more preferred upper limit is 25 mg KOH/g.

The film-forming resin mentioned above is not particularly restricted but includes, for example, acrylic resin, polyester resin, alkyd resin and polyether resin. These resins can be used each alone or in a combination of two or more different resins. In particular, use of acrylic resin and/or polyester resin is preferred from the standpoint of performance characteristics of the film such as weather resistance and water resistance.

Furthermore, said clear coating composition preferably contains a rheology control agent for insuring good coating workability. The rheology control agent is not particularly restricted but generally substances showing thixotropic properties can be used. For example, the substances mentioned for the water-borne base coating composition can be employed. Moreover, where necessary, a curing catalyst and a surface adjuster can also be formulated.

In the method of finish-coating automotive bodies according to the invention, a substrate to be coated is an automotive body which consists of steel plate parts and plastic parts. The steel members are not particularly restricted but even include those of such metals as iron, aluminum, copper and stainless steel, inclusive of castings and the like. The plastic members are not particularly restricted but include shaped articles and foams of polyurethane, polypropylene, polycarbonate and so forth.

The metal parts include, for example, the door, bonnet, roof, hood, fender, and trunk. The plastic parts include, for example, the bumper, facia, mirror, molded trimmings, and guard.

In the method of finish-coating automotive bodies according to the invention, the integral assembly of at least one each of the above-mentioned respective steel plate members and respective plastic members is used as the substrate to be coated. Moreover, the automobile includes not only the passenger car but also the autobicycle, bus, bicycle, etc. which comprise the above mentioned members.

The method of finish-coating automotive bodies according to the invention comprises, in sequence, a step of coating both steel plate and plastic parts of an automotive body concurrently with a water-borne base coating composition, a step of coating the same further concurrently with a clear coating composition containing an isocyanate compound as a curing agent in a wet-on-wet technique, and a step of causing the resulting successive coats to cure concurrently to form a multilayer film.

The water-borne base coating composition and clear coating composition are applied successively in a wet-on-wet technique, preferably by means of an electrostatic coating equipment. The coating equipment which can be used for said water-borne base coating composition is not particularly restricted but, for improved workability and surface appearance, an electrostatic air spray equipment known as "react-gun", for instance, or a rotary atomizer type electrostatic coating equipment known commonly as "µµ (micromicro) bell", "µ (micro) bell", or "meta-bell" can be employed. Multi-stage coating, preferably 2 to 3-stage coating, by such means as above can be used and the film may also be formed by means of a coating system using an electrostatic air spray equipment and a rotary atomizer type electrostatic equipment in combination.

The viscosity of said water-borne base coating composition is adjusted to spraying viscosity which is empirically determined taking into consideration various factors such as the atomization mechanism of the above electrostatic coating equipment and the field coating environment inclusive of temperature, humidity, etc., by using water as the diluent. Generally, the spraying viscosity within the range of temperature: 10°C to 40°C and humidity: 10 to 98% is preferably 15 to 60 seconds (/20°C, No. 4 Ford cup). If the spraying viscosity deviates from the above range, sagging, popping and other appearance troubles tend to take place. The more preferred viscosity is 18 to 50 seconds (/20°C, No. 4 Ford cup).

In the method of finish-coating automotive bodies according to the invention, the dry thickness of the base film formed with said water-borne base coating composition should vary according to the intended use but is preferably 5 µm as a lower limit to 35 µm as an upper limit. If the thickness of the base film exceeds 35 µm, the sharpness of image will be sacrificed and surface unevenness or sagging tends to take place. If the thickness of the base film is less than 5 µm, the hiding power will be insufficient and adhesion may also be undesirably decreased. The more preferred lower limit is 7 µm and the more preferred upper limit is 25 µm.

In the method of finish-coating automotive bodies according to the invention, the base film formed from said water-borne base coating composition remaining uncured is preferably heated at 40 to 100°C for 2 to 10 minutes before application of the clear coating composition in order that a satisfactory finish may be obtained.

In the method of the invention, the clear film of said clear coating composition is formed for smoothing out surface irregularities resulting from application of the base coating composition and preventing peppering and other troubles occurring when a luster color pigment is contained. The coating equipment for said clear coating composition is not particularly restricted but a rotary atomizer type electrostatic coating equipment such as the above-mentioned "µµ bell", "µ bell", or the like is preferably employed.

The clear coating composition mentioned above is diluted to a spraying viscosity which is empirically determined taking into consideration various factors such as the atomization mechanism of the above electrostatic coating equipment and the field coating environment inclusive of temperature and humidity, etc., by using an organic solvent as the diluent. Generally the spraying viscosity within the range of temperature: 10°C to 40°C and humidity: 10 to 98% is preferably 12 to 30 seconds (/20°C, No.4 Ford cup). If the spraying viscosity deviates from the above range, sagging, popping and other appearance troubles tend to take place. The more preferred viscosity is 13 to 25 seconds (/20°C, No. 4 Ford cup).

Generally the dry thickness of the clear film formed with said clear coating composition is preferably about 10 to 80 µm, more preferably about 20 to 60 µm. If the upper limit is exceeded, such troubles as popping and sagging will take place. If the dry thickness is below the lower limit, the surface irregularities of the base film may not be hided.

In the invention, the multilayer film consisting of said base film and clear film is obtained by curing successive coats concurrently, i.e. the so-called 2 coat-1-bake method. Since the operation of the baking oven can be omitted, the invention is advantageous from economic and environmental points of view.

The baking temperature for curing said successive coats is preferably within the range of 90 to 140°C. If the above upper limit is exceeded, the film will be excessively hard and brittle. On the other hand, if the baking temperature is below the lower limit, no sufficient cure can be expected. The baking time varies with different baking temperatures but is preferably 20 to 60 minutes at 90 to 120°C.

The thickness of said multilayer film is preferably 30 µm as a lower limit to 300 µm as an upper limit. If the thickness exceeds the above upper limit, physical properties of the film such as temperature cycling performance etc. will be adversely affected. If it is below the lower limit, the multilayer film itself will be decreased in strength. The more preferred lower limit is 50 µm and the more preferred upper limit is 250 µm.

The steel plate members and plastic members for use in the invention may optionally have been subjected to various coating sessions for the formation of an under film, an intermediate film, a conductive primer layer, a color primer layer, and/or the like, where necessary, prior to integration by assembling. Usually, for the purpose of improving the hiding effect and surface appearance, steel plate members are successively coated with the known undercoating composition, such as an electrocoating composition and then an intermediate coating composition, and then the above-mentioned base coating composition and clear coating composition are applied in that order. On the other hand, plastic members are usually coated with a conductive primer, a color primer, etc. and then said base coating composition and clear coating composition are applied in that order. The above-mentioned undercoating compostion and conductive primer are not particularly restricted but those in common use can be mentioned.

Usually the coating of plastic members comprises applying a conductive primer enabling electrostatic coating and, then, applying a base coating composition, and because said conductive primer generally contains carbon black, the resulting coat presents with a black appearance. When, therefore, a coating composition having a low hiding effect is used for base coating composition, the surface appearance of the multilayer film comprising the base film and clear film tends to be adversely affected. Particularly as the variation in coating color has been more and more amplified in recent years, the current trend is toward using base coating compositions having low hiding effect. If the base coating composition is directly applied on top of the conductive primer under the circumstances, the surface appearance tends to be poor and a color mismatch may occur between the steel plate and plastic parts. Therefore, a color primer may be used either in lieu of a conductive primer or applied in superimposition on the conductive primer layer. Coating plastic members with said color primer is a good practice, for the influence of said conductive primer on the color tone of the film can be minimized. In the case where said color primer is used, the color tone of the color primer is preferably the same as that of the intermediate coating composition to be applied to steel plate members.

The color primer mentioned above is a coating composition exclusive for plastic members which has been subjected to color matching according to each color tone for assisting in the color expression of the base coating composition and is generally electrically non-conductive. As the color primer mentioned above, a primer composition comprising a film-forming resin, a curing agent, a pigment, a solvent, etc. can be used. The film-forming resin mentioned just above is not particularly restricted but includes, for example, urethane resin and epoxy resin. The curing agent is not particularly restricted but may be a known curing agent suitable for the hardening reaction of said film-forming resin. The pigment is not particularly restricted but is preferably the pigment for use in the base coating composition. As the color primer mentioned above, commercial products such as "R-356" and "R-333" (both are products of Nippon Bee Chemical Co., Ltd.) can also be used.

In the case where the plastic member has not been coated with a conductive primer but coated with an electrically non-conductive color primer, the plastic member is not electrically conductive, so that when both the steel plate part and the plastic part are concurrently coated with the water-borne base coating composition using said electrostatic coating equipment, the coating conditions are preferably varied according to the respective substrate members.

Thus, while steel plate parts are subjected to usual electrostatic coating, plastic parts are preferably coated at a higher than usual delivery rate with the electric charge OFF. Since the plastic parts are not electrically conductive, coating without increasing the delivery rate results in a decreased film thickness to detract from surface appearance and color expression. In addition, coating at an increased delivery rate with the electric charge ON leads to an increased attached amount of the coating composition on the neighboring electrically conductive steel plate part to deteriorate the surface appearance.

An alternative preferred method for reducing said influence of the conductive primer on color tone of the film comprises coating the plastic member to be used in the invention successively with the conductive primer and/or color primer, followed by intermediate coating, base coating, and clear coating. In cases where coating is carried out in this manner, it is most preferred from workability points of view to perform the intermediate coating after assembling the steel plate and plastic members into an integral unit. The intermediate coating hides the conductive primer on the plastic part and, as it is applied concurrently to both kinds of parts, a satisfactory film can be formed while the cost is reduced and the process is shortened.

As a preferred case in which the concurrent coating of steel plate and plastic parts is desirable for said intermediate coating as well, there can be mentioned the case in which a flake-like pigment having a pearlescent gloss, such as interference mica pigment, white mica pigment or the like pigment, is used in the water-borne base coating composition.

The intermediate coating composition is not particularly restricted but includes the known intermediate coating compositions such as those of melamine-curing type or isocyanate-curing type. Specifically, water-borne intermediate coatings such as Orga P-2 (™, product of Nippon Paint Co., a melamine-curing white intermediate coating composition) and Orga P-30 (™, product of Nippon Paint Co., a melamine-curing gray intermediate coating composition) can be mentioned. The method for intermediate coating is not particularly restricted but includes hitherto-known techniques.

In cases where the steel plate and plastic parts are concurrently coated in intermediate coating, the base coating composition and clear coating composition may be applied in that order on an uncured intermediate film after intermediate coating. However, the base coating composition and clear coating composition preferably applied in that order on the cured intermediate film after heat-curing. The conditions of heat-curing after intermediate coating are not particularly restricted but may for example be 90 to 140°C for 15 to 60 minutes. After completion of this intermediate coating, the base film and clear film are formed in the above-mentioned manner.

Since the method of finish-coating automotive bodies according to the invention comprises coating steel plate and plastic parts concurrently, the steel plate parts and plastic parts can be coated with the common coating composition. Therefore, the color difference between one kind of member from the other owing to differences in coating formulations and coating conditions which would usually be inevitable when base coating compositions and clear coating compositions are applied in different places respectively, can be eliminated and, from energy conservation points of view, too, automotive bodies having a good color design and a high-quality appearance can be produced with great advantage on a commercial scale. Such automotive bodies are also subsumed in the concept of the present invention.

In accordance with the present invention, the steel plate part and plastic part which have heretofore required independent coating process can be concurrently finished. Moreover, the multilayer film obtained in accordance with the invention has sufficiently high adhesion, chipping resistance, and gloss. In addition, because the steel plate and plastic parts can be concurrently coated, a multilayer film outstanding in color design and free from a color difference between the two kinds of parts can be obtained.

### BEST MODE FOR CARRYING OUT THE INVENTION

Hereinafter, the present invention will be described in more detail by way of examples, but the present invention is not limited to these examples. And, a term "%" means "weight %" and a term "parts" means "parts by weight", unless otherwise specified.

### Production Example 1

### Production of emulsion resin 1

A reaction vessel containing 127 parts of deionized water was charged with 0.2 part of Adeka Reasoap NE-20 (™, product of Asahi Denka Co., Ltd., α-{1-[(allyloxy)methyl]-2-(nonylphenoxy)ethyl}-ω-hydroxyoxyethylene, an aqueous solution of 80 weight % on the solid content basis and 0.2 part of Aqualon HS-10 (™, product of Dai-Ichi Kogyo Seiyaku Co., Ltd., a polyoxyethylene alkyl propenylphenyl ether sulfate), and the temperature was increased to 80°C under stirring/mixing in a nitrogen stream. Then, as a first-stage α,β-ethylenically unsaturarted monomer mixture, a monomeric mixture of 18.5 parts of methyl acrylate, 31.7 parts of ethyl acrylate, 5.8 parts of 2-hydroxyethyl acrylate, 10.0 parts of styrene, 4.0 parts of acrylamide, 0.3 part of Adeka Reasoap NE-20, 0.2 part of Aqualon HS-10, and 70 parts of deionized water and an initiator solution composed of 0.2 part of ammonium persulfate and 7 parts of deionized water were added dropwise to the reaction vessel in parallel over 2 hours. After completion of dropwise addition, the reaction mixture was incubated for aging at the same temperature.

Furthermore, as a second-stage α,β-ethylenically unsaturarted monomer mixture, a monomeric mixture of 24.5 parts of ethyl acrylate, 2.5 parts of 2-hydroxyethyl acrylate, 3.1 parts of methacrylic acid, 0.3 part of Aqualon HS-10, and 30 parts of deionized water and an initiator solution composed of 0.1 part of ammonium persulfate and 3 parts of deionized water were added dropwise in parallel to the reaction vessel over 0.5 hour at 80°C. After completion of dropwise addition, the reaction mixture was incubated for aging at the same temperature for 2 hours.

The reaction mixture was then cooled to 40 °C and filtered through a 400-mesh filter. Then, an aqueous 10 weight % solution of dimethylaminoethanol was added until pH=7, whereby an emulsion resin 1 having a mean particle diameter of 110 nm, a nonvolatile content of 30%, a solids acid value of 20 mg KOH/g, a hydroxyl value of 40, and a Tg value of 0°C was obtained.

### Production Example 2

### Production of emulsion resin 2

Using n-butyl acrylate in lieu of the ethyl acrylate used in the first and second stages of emulsion polymerization, the procedure of Example 1 was otherwise faithfully followed to prepare an emulsion resin 2 having a mean particle diameter of 110 nm, a nonvolatile content of 30%, a solids acid value of 20 mg KOH/g, a hydroxyl value of 40, and a Tg value of -21°C.

### Production Example 3

### Production of emulsion resin 3

Using n-butyl methacrylate in lieu of the ethyl acrylate used in the first and second stages of emulsion polymerization, the procedure of Example 1 was otherwise faithfully followed to prepare an emulsion resin 3 having a mean particle diameter of 110 nm, a nonvolatile content of 30%, a solids acid value of 20 mg KOH/g, a hydroxyl value of 40, and a Tg value of 28°C.

### Production Example 4

### Production of water-soluble acrylic resin

A reaction vessel was charged with 23.9 parts of dipropylene glycol methyl ether and 16.1 parts of propylene glycol methyl ether, and the temperature was increased to 120°C under stirring/mixing in a nitrogen stream. Then, a mixture solution of 54.5 parts of ethyl acrylate, 12.5 parts of methyl methacrylate, 14.7 parts of 2-hydroxyethyl acrylate, 10.0 parts of styrene, and 8.5 parts of methacrylic acid and an initiator solution composed of 10.0 parts of dipropylene glycol methyl ether and 2.0 parts of t-butylperoxy-2-ethyl hexanoate were added dropwise in parallel to the reaction vessel over 3 hours. After completion of dropwise addition, the reaction mixture was incubated for aging at the same temperature for 0.5 hour.

Then, an initiator solution composed of 5.0 parts of dipropylene glycol methyl ether and 0.3 part of t-butylperoxy-2-ethyl hexanoate was added dropwise to the reaction vessel over 0.5 hour. After completion of dropwise addition, the reaction mixture was incubated for aging at the same temperature for 1 hour.

Then, using a desolvation device, 16.1 parts of the solvent was removed under reduced pressure (70 Torr) at 110°C, after which 187.2 parts of deionized water and 8.8 parts of dimethylaminoethanol were added. In this manner, a water-soluble acrylic resin having a nonvolatile content of 31.4%, a weight average molecular weight of 27000, a number average molecular weight of 9000, a solids acid value of 56 mg KOH/g, and a hydroxyl value of 70 was obtained.

### Production Example 5

### Production of metallic luster color pigment paste 1

In 46.6 parts of 2-ethylhexyl glycol was dissolved 33.3 parts of Alpaste MH8801 (™, product of Asahi Chemical Industry Co., Ltd., an aluminum pigment paste), and under stirring with a desk-size Disper, 20.0 parts of Sannix SP-750 (™, product of Sanyo Chemical Industries, Ltd., a polyether polyol, 100% on the solid content basis) and 0.4 part of lauryl acid phosphate were gradually added to the solution to prepare a metallic luster color pigment paste containing 41.6 weight % on the solid content basis of aluminum pigment.

### Production Example 6

### Production of metallic luster color pigment paste 2

In 63.7 parts of 2-ethylhexyl glycol was dissolved 9.1 parts of Pearl Grace SME-90-9 (™, product of Nihon Koken Kogyo K.K., white mice pigment), and under stirring with a bench-top Disper, 27.3 parts of Sannix SP-750 (™, product of Sanyo Chemical Industries, Ltd., a polyether polyol, 100% on the solid content basis) was gradually added. In this manner, a metallic luster color pigment paste 2 containing 36.4 weight % on the solid content basis of white mica pigment was obtained.

### Production Example 7

### Production of water-borne base coating composition A

First, 30.3 parts of NeoRez R-960 (™, an urethane emulsion, product of Avecia, 33% on the solid content basis), 165.5 parts of the emulsion resin 1 obtained in Production Example 1, 31.8 parts of the water-soluble acrylic resin obtained in Production Example 4, 75.0 parts of the metallic luster color pigment paste 1 obtained in Production Example 5, and 39.0 parts of Cymel 204 (™, product of Mitsui Cytec, Ltd., a butylated melamine resin, 77% on the solid content basis) were stirred/mixed. This was followed by addition of an aqueous 10 weight % solution of dimethylaminoethanol (DMEA). The whole mixture was adjusted to pH=8, whereby a uniformly dispersed water-borne base coating composition A was obtained.

### Production Example 8

### Production of water-borne base coating composition B

First, 30.3 parts of NeoRez R-960 (™, product of Avecia, an urethane emulsion, 33% on the solid content basis), 165.5 parts of the emulsion resin 1 obtained in Production Example 1, 31.8 parts of the water-soluble acrylic resin obtained in Production Example 4, 55.0 parts of the metallic luster color pigment paste 2 obtained in Production Example 6, 39.0 parts of Cymel 204 (™, product of Mitsui Cytec, Ltd., a butylated melamine resin, 77% on the solid content basis) were stirred/mixed. This was followed by addition of an aqueous 10 weight % solution of dimethylaminoethanol (DMEA). The whole mixture was adjusted to pH=8, whereby a uniformly dispersed water-borne base coating composition B was obtained.

### Production Example 9

### Production of water-borne base coating composition C

Using the emulsion resin 2 obtained in Production Example 2 in lieu of the emulsion resin 1 obtained in Production Example 1, the procedure of Production Example 7 was otherwise faithfully followed to prepare a water-borne base coating composition C.

### Production Example 10

### Production of water-borne base coating composition D

Using the emulsion resin 3 obtained in Production Example 3 in lieu of the emulsion resin 1 obtained in Production Example 1, the procedure of Production Example 7 was otherwise faithfully followed to prepare a water-borne base coating composition D.

### (Formation of a conductive primer layer on a plastic member)

A 10 x 20 cm testpiece of the PP bumper material manufactured by Toyota Motor Corporation was coated with the black conductive primer RB190CD (™, Nippon Bee Chemical Co., Ltd.) in a dry film thickness of 10 µm and baked at 120°C for 30 minutes to prepare a plastic member (a).

### (Undercoating of a steel plate member)

A 300 x 200 x 0.8 mm zinc phosphate-treated dull steel plate was electrodeposited with Powernix 110 (™, product of Nippon Paint Co., a cationic electrocoating composition) in a dry film thickness of 20 µm and baked at 160°C for 30 minutes to prepare a steel plate member (b).

### (Intermediate coating of the steel plate member)

A 300 x 200 x 0.8 mm zinc phosphate-treated dull steel plate was electrodeposited with Powernix 110 (™, product of Nippon Paint Co.) in a dry film thickness of 20 µm and baked at 160°C for 30 minutes. By the air-spray method, the coated plate was further coated in 2 stages with Orga-P-30 (™, product of Nippon Paint Co., a melamine-curing gray intermediate coating composition), diluted to a viscosity of 25 seconds (No. 4 Ford cup, 20°C) beforehand, in a dry film thickness of 35 µm and baked at 140°C for 30 minutes, followed by cooling, to prepare a steel plate member (c).

### Examples 1 to 3

The plastic member (a) obtained above was laminated onto one-half of the surface of said steel plate member (c) to prepare a substrate consisting of plastic and steel parts. Then, using Metallic Bell COPES-IV (a rotary atomizer type electrostatic coating equipment for water-borne coatings, manufactured by ABB Industries, Ltd.), the above substrate was coated with the water-borne base coating composition A prepared in Production Example 7 in two stages at room temperature = 25°C and humidity = 75% in a dry film thickness of 15 µm. A 1.5-minute interval setting was provided between the two coating stages. After the second coating, a 5-minute interval setting was carried out. Thereafter, a preheating was performed at 80°C for 3 minutes.

After preheating, the coated panel was allowed to cool to room temperature and using a micromicro bell (a rotary atomizer type electrostatic coating equipment manufactured by ABB Randsburg), the panel was further coated with the clear coating composition "Polyurexcel O-1100 Clear" (™, an isocyanate-curing clear coating composition, product of Nippon Paint Co.) in one stage in a dry film thickness of 40 µm, followed by 7-minute setting. The thus-coated panel was baked in a hot-air dryer at 100°C (Example 1), 120°C (Example 2), or 140°C (Example 3) for 30 minutes to form a multilayer film on the substrate.

### Examples 4 to 6

Except that the steel plate member (b) was used in lieu of the steel plate member (c), the procedure of Example 1 was otherwise repeated to prepare a substrate. By the air-spray method, the above substrate was coated in 2 stages with Orga P-2 (™, product of Nippon Paint Co., a melamine-curing white intermediate coating composition), diluted to a viscosity of 25 seconds (No. 4 Ford cup, 20°C) beforehand, in a dry film thickness of 35 µm, then baked at 140°C for 30 minutes, followed by cooling. Then, this coated panel was further coated with the water-borne base coating composition (B) obtained in Production Example 8 and "Polyurexcel O-1100 Clear" in the same manner as in Examples 1 to 3 to construct a multilayer film on the substrate.

### Comparative Examples 1 to 3

Using "MAC O-1810 Clear" (™, product of Nippon Paint Co., an acid-epoxy curing clear coating composition) as the clear coating composition, a multilayer film was constructed in otherwise the same manner as in Examples 1 to 3.

### Comparative Examples 4 to 6

Using "MAC O-1810 Clear" (™, product of Nippon Paint Co., an acid-epoxy curing clear coating composition) as the clear coating composition, a multilayer film was constructed in otherwise the same manner as in Examples 4 to 6.

### Comparative Example 7

Using the water-borne base coating composition C in lieu of the water-borne base coating composition A, a multilayer film was constructed in otherwise the same manner as in Example 2 (baking temperature 120°C).

### Comparative Example 8

Using the water-borne base coating composition D in lieu of the water-borne base coating composition A, a multilayer film was constructed in otherwise the same manner as in Example 2.

### <Evaluation of gloss>

The gloss of the coated surface was visually evaluated on the following rating scale. The results are presented in Tables 1 to 3.
5: Remarkably glossy
4: Sufficiently glossy
3: Glossy
2: Somewhat insufficiently glossy
1: Not glossy

### <Evaluation of adhesion>

The coated panel was allowed to sit at room temperature for 3 days and, then, immersed in warm water at 40°C for 10 days. The panel was withdrawn and rinsed and using a cutter knife, 100 of 2mm-square cross-cuts reaching the substrate were made on the coated panel and a Nichiban's cellophane tape was pressed against the surface by thumb. Thereafter, the tape was forcefully peeled off in the 45° upward direction to evaluate the adhesion of the film to the substrate member. The results are presented in Table 1 according to the following rating scale.
5: No square is peeled off
4: 1 ~ <10 squares are peeled off
3: 10 ~ <50 squares are peeled off
2: 50 ~ <90 squares are peeled off
1: Not less than 90 squares are peeled off

### <Evaluation of chipping resistance>

Using Gravel Chipping Test Instrument (manufactured by Suga Test Instruments Co., Ltd.), 50 g of No.7 gravels were caused to collide against the film cooled to -20°C beforehand under an air pressure of 4.0 kg/cm² at an angle of 45° from a distance of 35 cm and the degree of chipping was visually observed and chipping resistance of the coated panel was evaluated according to the following rating scale.
5: No chipping
4: Chipping is small in area and low in frequency
3: Chipping is small in area but somewhat high in frequency
2: Chipping is large in area but low in frequency
1: Chipping is large in area and high in frequency

### <Color difference>

With the color tone of the film formed on the steel plate part being used as the standard, the color difference (ΔE) of the film formed on the plastic part was measured with Minolta CR-300 (™, Minolta Camera Co., Ltd.).

**Table 1**

| Gloss | | Ex. | | | Compar. Ex. | | |
|---|---|---|---|---|---|---|---|
| | | 1 | 2 | 3 | 1 | 2 | 3 |
| Baking temperature (°C) | | 100 | 120 | 140 | 100 | 120 | 140 |
| Water-borne base coating composit | | A | A | A | A | A | A |
| Clear coating composition | | 0-1100 | 0-1100 | 0-1100 | 0-1810 | 0-1810 | 0-1810 |
| Plastic member (a) | Gloss | 5 | 5 | 5 | Film not formed | 5 | 5 |
| | Adhesion | 5 | 5 | 5 | | 3 | 5 |
| | Chipping resistance | 5 | 4 | 4 | | 3 | 4 |
| | Color difference (ΔE) | 0.1 | 0.1 | 0.2 | | 0.2 | 0.4 |
| Steel plate member (c) | Gloss | 5 | 5 | 5 | | 5 | 5 |
| | Adhesion | 5 | 5 | 5 | | 3 | 5 |
| | Chipping resistance | 4 | 4 | 4 | | 3 | 4 |

**Table 2**

| | | Ex. | | | Compar. Ex. | | |
|---|---|---|---|---|---|---|---|
| | | 4 | 5 | 6 | 4 | 5 | 6 |
| Baking temperature (°C) | | 100 | 120 | 140 | 100 | 120 | 140 |
| composition | | B | B | B | B | B | B |
| Clear coating composition | | 0-1100 | 0-1100 | 0-1100 | 0-1810 | 0-1810 | 0-1810 |
| Plastic member (a) | Gloss | 5 | 5 | 5 | Film not formed | 5 | 5 |
| | Adhesion | 5 | 5 | 5 | | 3 | 5 |
| | Chipping resistance | 5 | 5 | 4 | | 3 | 4 |
| | Color difference (ΔE) | 0.1 | 0.2 | 0.2 | | 0.3 | 0.5 |
| Steel plate member (b) | Gloss | 5 | 5 | 5 | | 5 | 5 |
| | Adhesion | 5 | 5 | 5 | | 3 | 5 |
| | Chipping resistance | 5 | 4 | 4 | | 3 | 4 |

**Table 3**

| | | Compar. Ex. | |
|---|---|---|---|
| | | 7 | 8 |
| Baking temperature (°C) | | 120 | 120 |
| composition | | C | D |
| Clear coating composition | | 0-1100 | 0-1100 |
| Plastic member (a) | Gloss | 2 | 2 |
| | Adhesion | 4 | 4 |
| | Chipping resistance | 4 | 4 |
| | Color difference (ΔE) | 0.1 | 0.2 |
| Steel plate member (b) | Gloss | 2 | 2 |
| | Adhesion | 4 | 4 |
| | Chipping resistance | 4 | 4 |

The multilayer films obtained in Examples excelled in gloss, adhesion and chipping resistance, with substantially no color difference between the two kinds of members. On the other hand, the multilayer films obtained in Comparative Examples were satisfactory enough in adhesion, among others, but the color difference between the two kinds of members was remarkable and no satisfactory gloss was obtained. Therefore, the latter multilayer films were inferior in color design to the multilayer films according to Examples.

## Claims

1. A method of finish-coating automotive bodies comprising, in sequence, a step of coating both steel plate part and plastic part of an automotive body concurrently with a water-borne base coating composition, a step of coating the same further concurrently with a clear coating composition containing an isocyanate compound as a curing agent in a wet-on-wet technique, and a step of causing the resulting successive coats to cure concurrently to form a multilayer film,
wherein said water-borne base coating composition comprises an emulsion resin resulting from emulsion polymerization of an α,β-ethylenically unsaturated monomer mixture comprising at least 65 weight % of a (meth)acrylic ester whose ester moiety has 1 or 2 carbon atoms, and having an acid value of 3 to 50 mg KOH/g and a hydroxyl value of 10 to 150 and a pigment.

2. The method of finish-coating automotive bodies according to Claim 1,
wherein the emulsion polymerization is carried out in two stages.

3. The method of finish-coating automotive bodies according to Claim 1 or 2,
wherein the pigment is at least partially composed of a luster color pigment.

4. The method of finish-coating automotive bodies according to any of Claims 1 to 3,
wherein the water-borne base coating composition contains 8 to 30 parts by weight of urethane emulsion (A) and 15 to 35 parts by weight of melamine resin (B) relative to 100 parts by weight of the resin solids in the coating composition.

5. The method of finish-coating automotive bodies according to any of Claims 1 to 4,
wherein the plastic part is coated with a color primer prior to coating with the water-borne base coating composition.

6. The method of finish-coating automotive bodies according to any of Claims 1 to 5, comprising
a step of coating both steel plate part and plastic part concurrently with an intermediate coating composition prior to the step of coating with the water-borne base coating composition.

7. An automotive body having a multilayer film formed by the method of finish-coating automotive bodies according to any of Claims 1 to 6.
